# EUROPEAN PATENT SPECIFICATION

(11) **EP 2 864 144 B1**
(45) Date of publication and mention of the grant of the patent: **02.05.2018**
(21) Application number: 13765440.6
(22) Date of filing: 25.06.2013
(51) Int. Cl.: B60K 6/442, B60K 6/387

(54) **HYBRID TRANSMISSION FOR A MOTOR VEHICLE**
HYBRIDGETRIEBE FÜR EIN KRAFTFAHRZEUG
TRANSMISSION HYBRIDE POUR VÉHICULE À MOTEUR

(30) Priority: 26.06.2012 IT TO20120565
(43) Date of publication of application: 29.04.2015
(73) Proprietor: OERLIKON GRAZIANO S.P.A., 10098 Rivoli (Torino) (IT)
(72) Inventor: TORRELLI, Claudio, I-10124 Torino (Italy) (IT)
(74) Representative: Rondano, Davide
(86) International application number: PCT/IB2013/055216
(87) International publication number: WO 2014/002012

(56) References cited:
- EP-A2- 1 122 109
- FR-A1- 2 951 995
- US-A1- 2002 024 306

## Description

The present invention relates to a hybrid transmission for a motor vehicle, comprising a main gearbox, which is made as a mechanical gearbox with a plurality of gears and is adapted to be connected to a shaft of the internal combustion engine of the vehicle, as well first and second electric machines connected to the main gearbox so as to assist the internal combustion engine of the vehicle in the generation of the driving torque to be transmitted to the vehicle wheels.

Hybrid transmissions for motor vehicles are known, both of the single-clutch type and of the double-clutch type, in which the electric machine is permanently connected or selectively connectable to a primary shaft or to a secondary shaft of the main gearbox so as to be able to transmit torque to that shaft or to receive torque from that shaft. The electric machine is thus able to perform not only the main functions of traction (generation of mechanical power for the vehicle wheels using the energy provided by the vehicle batteries) and of regeneration (generation of electric power for the vehicle batteries using the energy recovered from the kinetic energy of the vehicle or produced by the internal combustion engine when the vehicle is stationary), but also secondary functions such as for example the functions of alternator and of starting motor. US 2002/0024306 A1 discloses a hybrid transmission for a motor vehicle, comprising an arrangement of clutches and planetary gear sets connecting two electrical machines respectively to a primary and a secondary shaft of a mechanical gearbox.

It is an object of the present invention to provide a hybrid transmission for a motor vehicle which is able to offer a wider range of available operating modes.

This and other objects are fully achieved, according to a first aspect of the present invention, by virtue of a hybrid transmission for a motor vehicle having the characteristics defined in the enclosed independent claim 1 and, according to another aspect of the present invention, by virtue of a hybrid transmission for a motor vehicle having the characteristics defined in the enclosed independent claim 6.

Preferred embodiments of the invention are the subject-matter of the dependent claims, the content of which is to be regarded as being an integral and integrating part of the following description.

The characteristics and advantages of the present invention will appear from the following detailed description, given purely by way of non-limiting example with reference to the appended drawings, where:
Figure 1 is a schematic view of a hybrid transmission for a motor vehicle according to an embodiment of the present invention, in the neutral condition;
Figures 2 and 3 are a section view and a front view, respectively, which show in detail, on an enlarged scale, one of the two secondary gearboxes of the transmission of Figure 1;
Figure 4 is a schematic view of the transmission of Figure 1 in the condition of engagement of the first gear of the main gearbox;
Figure 5 is a schematic view of the transmission of Figure 1 in the condition of engagement of the second gear of the main gearbox;
Figure 6 is a schematic view of the transmission of Figure 1 in the condition of engagement of the third gear of the main gearbox;
Figure 7 is a schematic view of the transmission of Figure 1 in the condition of engagement of the fourth gear of the main gearbox;
Figure 8 is a schematic view of the transmission of Figure 1 in the condition of traction in purely electric mode, in which the driving torque is generated only by the second electric machine (i.e. by the electric machine associated to the secondary shaft of the main gearbox) with the low gear of the respective secondary gearbox engaged;
Figure 9 is a schematic view of the transmission of Figure 1 in the condition of traction in purely electric mode, in which the driving torque is generated only by the second electric machine (i.e. by the electric machine associated to the secondary shaft of the main gearbox) with the high gear of the respective secondary gearbox engaged;
Figure 10 is a schematic view of the transmission of Figure 1 in the condition in which the first electric machine (i.e. the electric machine associated to the primary shaft of the main gearbox) is connected to the internal combustion engine of the vehicle with the low gear of the respective secondary gearbox engaged; and
Figure 11 is a schematic view of the transmission of Figure 1 in the condition in which the first electric machine is connected to the internal combustion engine of the vehicle with the high gear of the respective secondary gearbox engaged.

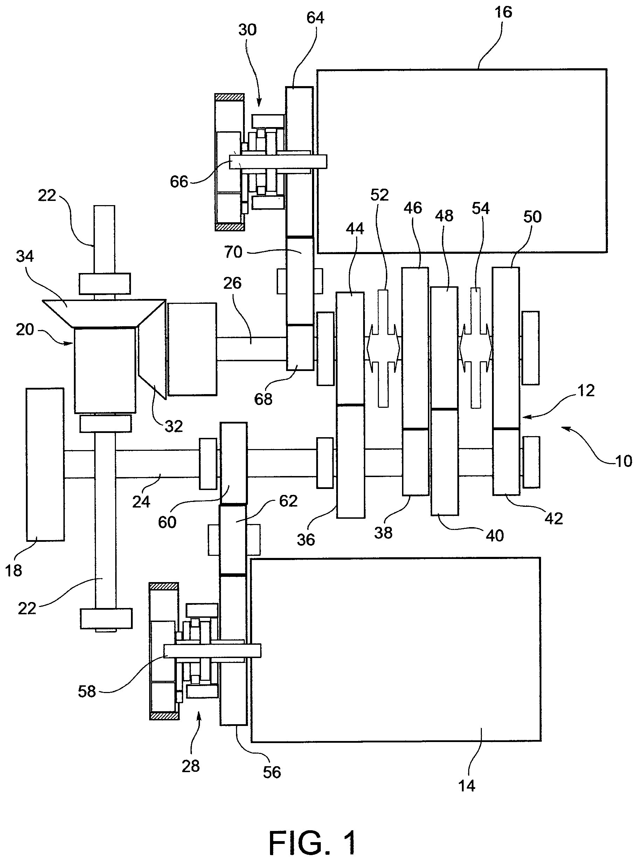

With reference first to Figure 1, a hybrid transmission for a motor vehicle according to an embodiment of the present invention is generally indicated 10 and basically comprises a main gearbox 12 associated to the internal combustion engine of the vehicle (not shown), a first electric machine 14 and a second electric machine 16. The main gearbox 12 is a mechanical gearbox with a plurality of gears (in the illustrated embodiment, the gearbox has four gears, but it might of course have a different number of gears, for example six gears) and is intended to be connected on the input side to the internal combustion engine of the vehicle through a friction clutch 18 and on the output side to vehicle wheels (not shown) through a differential gear 20 and through a pair of semi-axles 22. The friction clutch 18, as well as the differential gear 20, are of per-se-known type and do not play any role in the present invention, and therefore they will not be described in detail in the following description. The first electric machine 14 is releasably connected to the input (namely, to a primary shaft 24) of the main gearbox 12 and is therefore able to exchange (i.e. to transmit and to receive) torque with the internal combustion engine of the vehicle, according to a plurality of operating modes which will be illustrated in detail further on. The second electric machine 16 is releasably connected to the output (namely, to a secondary shaft 26) of the main gearbox 12 and is therefore able to exchange (i.e. to transmit and to receive) torque with the vehicle wheels, according to a plurality of operating modes which will be illustrated in detail further on. The transmission 10 further comprises a first secondary gearbox 28, which is interposed between the first electric machine 14 and the primary shaft 24 of the main gearbox 12 to change the transmission ratio with which the first electric machine 14 transmits the motion to the primary shaft 24 of the main gearbox 12 or receives the motion from that shaft, and a second secondary gearbox 30, which is interposed between the second electric machine 16 and the secondary shaft 26 of the main gearbox 12 to change the transmission ratio with which the second electric machine 16 transmits the motion to the secondary shaft 26 of the main gearbox 12 or receives the motion from that shaft.

In the embodiment shown in Figure 1, the transmission is of the single-clutch type and therefore the main gearbox 12 comprises a single primary shaft 24 which can be torsionally coupled to the shaft of the internal combustion engine of the vehicle by means of the friction clutch 18. However, the transmission might also be of the double-clutch type, in which case the main gearbox would comprise, in per-se-known manner, two primary shafts, each of which can be coupled to the shaft of the internal combustion engine of the vehicle by means of a respective friction clutch.

Moreover, in the embodiment shown in Figure 1, the main gearbox 12 is a gearbox with two axes and therefore comprises a single secondary shaft 26 arranged parallel to the primary shaft 24. However, the main gearbox 12 might also comprise more than one secondary shaft.

The primary shaft 24 of the main gearbox 12 carries a plurality of driving gearwheels (four driving gearwheels, in the embodiment shown in Figure 1) each associated to a respective gear (or transmission ratio), whereas the secondary shaft 26 carries a corresponding plurality of driven gearwheels permanently meshing each with a respective driving gearwheel to provide a respective gear. The secondary shaft 26 also carries a final reduction pinion 32 intended to mesh with an input gearwheel 34 of the differential gear 20.

More specifically, in the embodiment shown in Figure 1 the primary shaft 24 carries, in the order from left to right with respect to a person looking at Figures 1 to 9, a driving gearwheel 36 associated to the fourth gear, a driving gearwheel 38 associated to the second gear, a driving gearwheel 40 associated to the third gear and a driving gearwheel 42 associated to the first gear. In the embodiment shown in Figure 1 the driving gearwheels 36, 38, 40 and 42 are made as fixed wheels and are therefore permanently connected for rotation with the primary shaft 24.

According to an embodiment, the secondary shaft 26 carries, in the order from left to right with respect to a person looking at Figure 1, a driven gearwheel 44 permanently meshing with the driving gearwheel 36 to form the gear set of fourth gear, a driven gearwheel 46 permanently meshing with the driving gearwheel 38 to form the gear set of second gear, a driven gearwheel 48 permanently meshing with the driving gearwheel 40 to form the gear set of third gear and a driven gearwheel 50 permanently meshing with the driving gearwheel 42 to form the gear set of first gear. Preferably, the driven gearwheels 44, 46, 48 and 50 are idly mounted on the secondary shaft 26 and are selectively connectable for rotation therewith by means of coupling devices of per-se-known type. More specifically, the secondary shaft 26 carries a first coupling device 52 arranged between the driven gearwheels 44 and 46 to selectively connect either of these wheels for rotation with the secondary shaft 26, and a second coupling device 54 interposed between the driven gearwheels 48 and 50 to selectively connect either of these wheels for rotation with the secondary shaft 26. The first coupling device 52 is shiftable between a first engagement position (left-hand position with respect to a person looking at Figure 1), in which it connects the driven gearwheel 44 for rotation with the secondary shaft 26, and a second engagement position (right-hand position with respect to a person looking at Figure 1), in which it connects the driven gearwheel 46 for rotation with the secondary shaft 26, passing through an intermediate neutral position, in which it does not connect for rotation with the secondary shaft 26 either the driven gearwheel 44 or the driven gearwheel 46. The second coupling device 54 is shiftable between a first engagement position (left-hand position with respect to a person looking at Figure 1), in which it connects the driven gearwheel 48 for rotation with the secondary shaft 26, and a second engagement position (right-hand position with respect to a person looking at Figure 1), in which it connects the driven gearwheel 50 for rotation with the secondary shaft 26, passing through an intermediate neutral position, in which it does not connect for rotation with the secondary shaft 26 either the driven gearwheel 48 or the driven gearwheel 50.

Not only the number of shafts of the main gearbox 12, as already mentioned above, but also the number of gears and the arrangement of the gearwheels associated to the various gears may of course be different from those proposed herein.

As already stated above, the first electric machine 14 is releasably connected to the input of the main gearbox 12, while the second electric machine 16 is releasably connected to the output of the main gearbox 12.

According to an embodiment, the first electric machine 14 is releasably connected to the primary shaft 24 of the main gearbox 12 through a first connection gear set comprising a gearwheel 56 carried by an output shaft 58 of that machine (which output shaft 58 is advantageously oriented parallel to the shafts 24 and 26 of the main gearbox 12), a gearwheel 60 carried by the primary shaft 24 and an intermediate gearwheel 62 permanently meshing both with the gearwheel 56 and with the gearwheel 60. Likewise, the second electric machine 16 is releasably connected to the secondary shaft 26 of the main gearbox 12 through a second connection gear set comprising a gearwheel 64 carried by an output shaft 66 of that machine (which output shaft 66 is advantageously oriented parallel to the shafts 24 and 26 of the main gearbox 12), a gearwheel 68 carried by the secondary shaft 26 and an intermediate gearwheel 70 permanently meshing both with the gearwheel 64 and with the gearwheel 68. Further intermediate gearwheels, in addition to the gearwheel 62, might be interposed between the gearwheels 56 and 60 of the first connection gear set. Likewise, further intermediate gearwheels, in addition to the gearwheel 70, might be interposed between the gearwheels 64 and 68 of the second connection gear set.

In the embodiment shown in Figure 1, the gearwheel 60 of the first connection gear set is made as a fixed wheel, and is therefore drivingly connected for rotation with the primary shaft 24, whereas the gearwheel 56 of the first connection gear set is idly mounted on the output shaft 58 of the first electric machine 14 and is connectable for rotation therewith by means of the first secondary gearbox 28. Likewise, the gearwheel 68 of the second connection gear set is made as a fixed wheel, and is therefore drivingly connected for rotation with the secondary shaft 26, whereas the gearwheel 64 of the second connection gear set is idly mounted on the output shaft 66 of the second electric machine 16 and is connectable for rotation therewith by means of the second secondary gearbox 30. Alternatively, should the first secondary gearbox 28 not be provided for, the gearwheel 56 of the first connection gear set would be made as a fixed wheel, and therefore would be drivingly connected for rotation with the output shaft 58 of the first electric machine 14, whereas the gearwheel 60 of the first connection gear set would be idly mounted on the primary shaft 24 and would be connectable for rotation therewith by means of a respective coupling device. Likewise, should the second secondary gearbox 30 not be provided for, the gearwheel 64 of the second connection gear set would be made as a fixed wheel, and therefore would be drivingly connected for rotation with the output shaft 66 of the second electric machine 16, whereas the gearwheel 68 of the second connection gear set would be idly mounted on the secondary shaft 26 and would be connectable for rotation therewith by means of a respective coupling device.

The first secondary gearbox 28 allows to vary the transmission ratio with which the first electric machine 14 transmits the motion to the primary shaft 24 of the main gearbox 12, or receives the motion from that shaft, and also to disconnect the first electric machine 14 from the primary shaft 24 of the main gearbox 12. Likewise, the second secondary gearbox 30 allows to vary the transmission ratio with which the second electric machine 16 transmits the motion to the secondary shaft 26 of the main gearbox 12, or receives the motion from that shaft, and also to disconnect the second electric machine 16 from the secondary shaft 26 of the main gearbox 12.

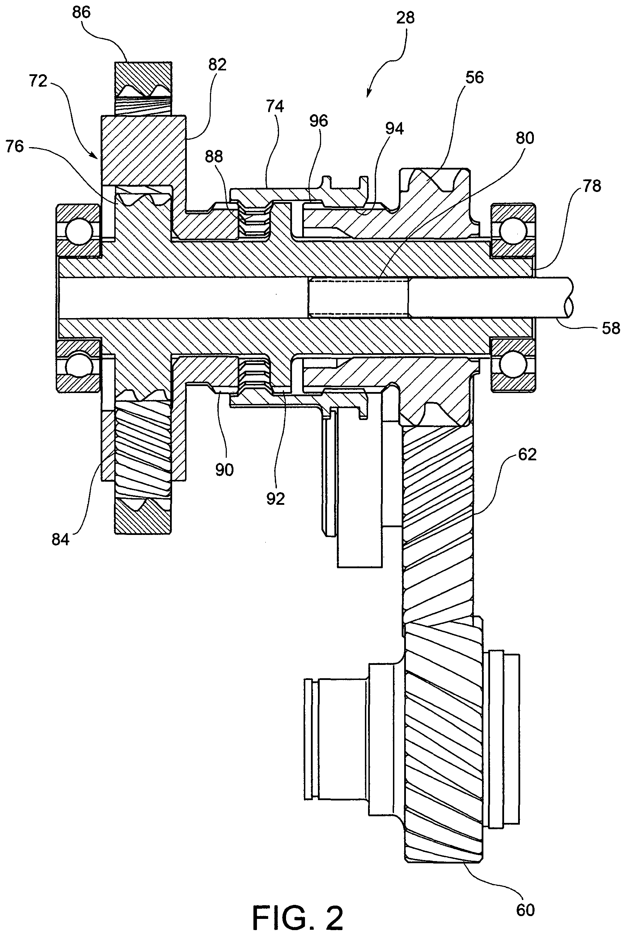

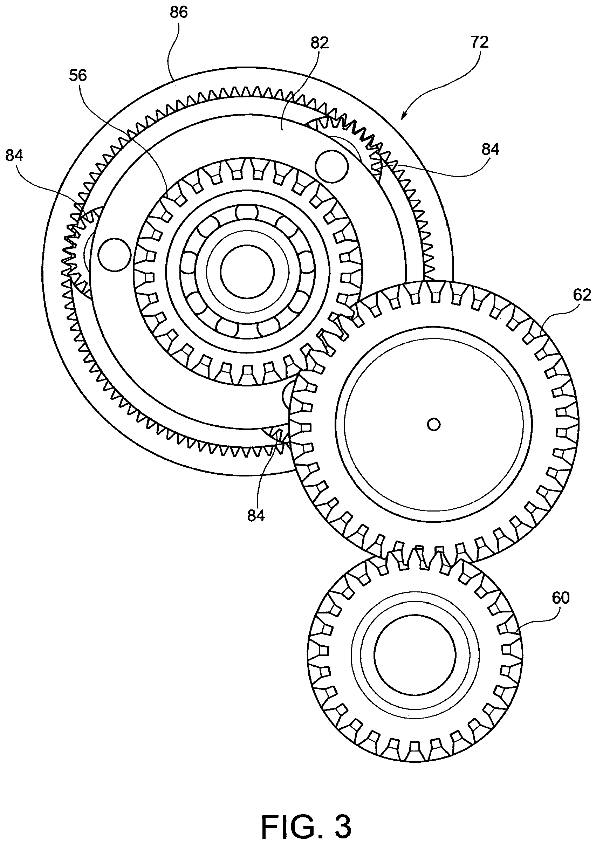

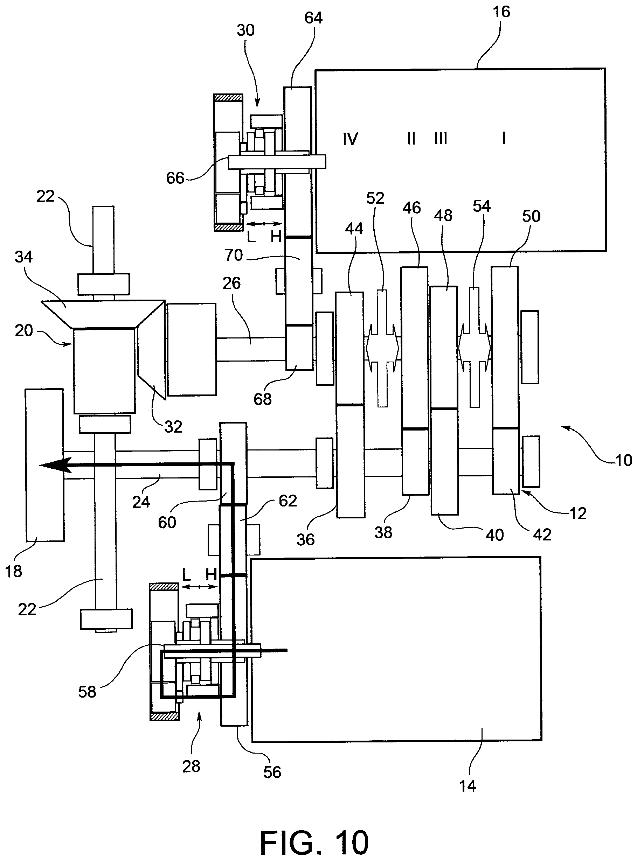

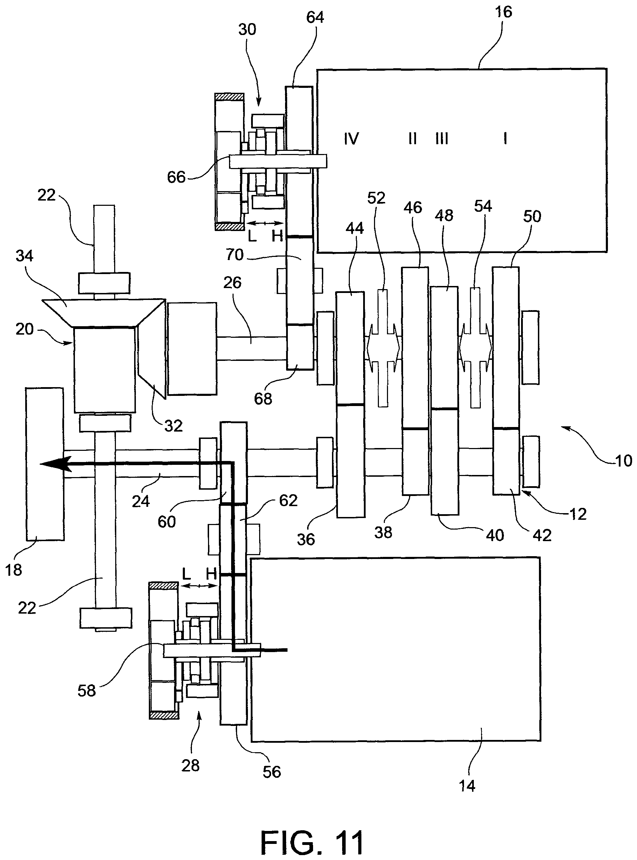

The structure and operation of the two secondary gearboxes 28 and 30 will be described now in detail, with reference in particular to Figures 2 and 3. In Figures 2 and 3 the reference numerals relating to the first secondary gearbox 28 are used, but the description provided here below is also applicable to the second secondary gearbox 30. In the embodiment shown in Figures 2 and 3, the first secondary gearbox 28 is a gearbox with two gears and comprises a reduction mechanism 72 interposed between the shaft 58 of the first electric machine 14 and the gearwheel 56 of the first connection gear set and a coupling device 74 adapted to connect the gearwheel 56 for rotation alternatively with the reduction mechanism 72 or with the output shaft 58. In this way, when the gearwheel 56 is connected for rotation with the reduction mechanism 72, the first electric machine 14 transmits the motion to the primary shaft 24 of the main gearbox 12 with a first gear (low gear) engaged, the torque passing through the output shaft 58, the reduction mechanism 72, the gearwheel 56, the intermediate gearwheel 62 and the gearwheel 60, or vice versa (depending on the first electric machine 14 operating as a motor or as a generator), whereas when the gearwheel 56 is connected for rotation directly with the output shaft 58, the first electric machine 14 transmits the motion to the primary shaft 24 of the main gearbox 12 with a second gear (high gear) engaged, the torque passing through the output shaft 58, the gearwheel 56, the intermediate gearwheel 62 and the gearwheel 60, or vice versa (depending on the first electric machine 14 operating as a motor or as a generator). More specifically, in the embodiment shown in Figures 10 and 11 the reduction mechanism 72 is a planetary reduction mechanism and comprises a sun gear 76, which is drivingly connected for rotation with an intermediate shaft 78 connected in turn for rotation, for example by means of a splined coupling 80, with the output shaft 58 of the first electric machine 14, a planet carrier 82 carrying a plurality of planet gears 84 (three planet gears, in the embodiment shown in the drawings), and a ring gear 86. Both the planet carrier 82 and the gearwheel 56 are idly mounted on the intermediate shaft 78. The coupling device 74 allows to connect alternatively the planet carrier 82 or the gearwheel 56 for rotation with the intermediate shaft 78, and hence with the output shaft 58 of the first electric machine 14. In the embodiment shown in Figures 2 and 3, the coupling device 74 is made as a sliding sleeve and is provided on the one hand with first engagement teeth 88 (made as inner teeth in the illustrated example) adapted to mesh alternatively with corresponding engagement teeth 90 of the planet carrier 82 or with corresponding engagement teeth 92 of the intermediate shaft 78 (both made as outer teeth in the illustrated example) and on the other hand with second engagement teeth 94 (made as inner teeth in the illustrated example) which permanently mesh with corresponding engagement teeth 96 (made as outer teeth in the illustrated example) of the gearwheel 56. The coupling device 74 is shiftable between a first engagement position (left-hand position with respect to a person looking at Figure 2), in which it connects the planet carrier 82 for rotation with the gearwheel 56, thus providing the low gear, a second engagement position (right-hand position with respect to a person looking at Figure 2), in which it connects the intermediate shaft 78, and hence the output shaft 58, for rotation with the gearwheel 56, thus providing the high gear, and a neutral position, in which the gearwheel 56 is neither connected to the planet carrier 82 nor to the intermediate shaft 78.

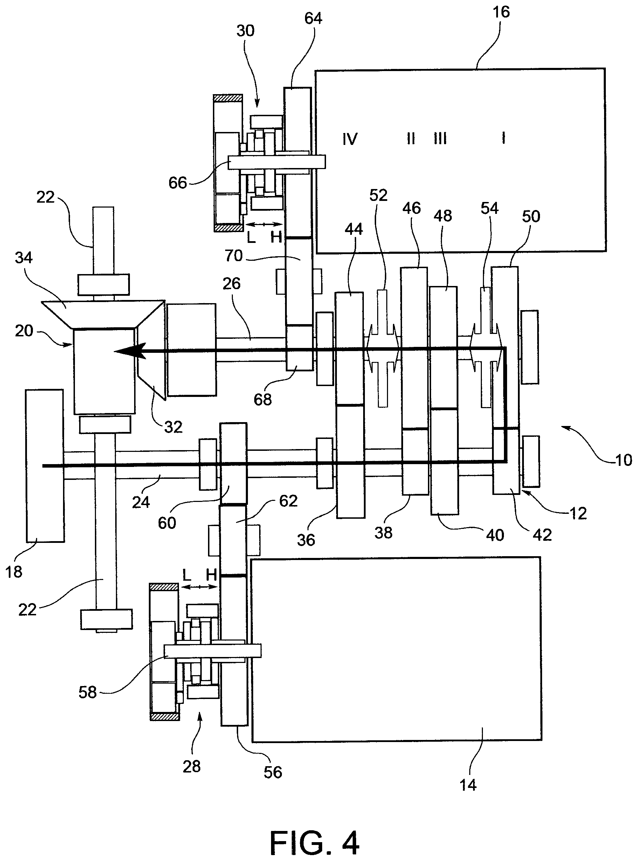

With reference now to Figures 4 to 11, where the gear sets associated to the first, second, third and fourth gears of the main gearbox 12 are indicated with the roman numerals I, II, III and IV, respectively, while the positions of the coupling devices 74 of the two secondary gearboxes 28 and 30 corresponding to the engagement of the low gear and to the engagement of the high gear are indicated L and H, respectively, some of the various operating conditions of the transmission 10 according to the proposed embodiment will be described. In each of the schemes shown in Figures 4 to 11, the torque path inside the transmission is indicated by an arrow.

Figures 4 to 7 refer to the condition where neither of the electric machines 14 and 16 is connected to the main gearbox 12, as both the coupling devices 74 of the two secondary gearboxes 28 and 30 are in the neutral position.

More specifically, Figure 4 shows the condition of engagement of the first gear, obtained by shifting the coupling device 54 into the second engagement position defined above, in which that device connects the driven gearwheel 50 for rotation with the secondary shaft 26. The transmission of the motion from the primary shaft 24 to the secondary shaft 26 of the main gearbox 12 takes place therefore through the gear set of first gear formed by the driving gearwheel 42 and by the driven gearwheel 50.

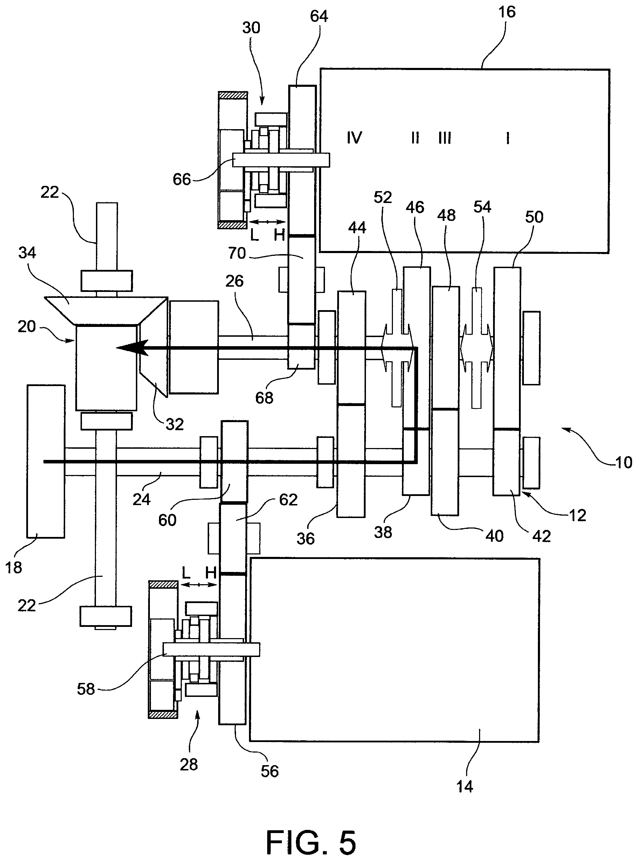

Figure 5 shows the condition of engagement of the second gear, obtained by shifting the coupling device 52 into the second engagement position defined above, in which that device connects the driven gearwheel 46 for rotation with the secondary shaft 26. The transmission of the motion from the primary shaft 24 to the secondary shaft 26 of the main gearbox 12 takes place therefore through the gear set of second gear formed by the driving gearwheel 38 and by the driven gearwheel 46.

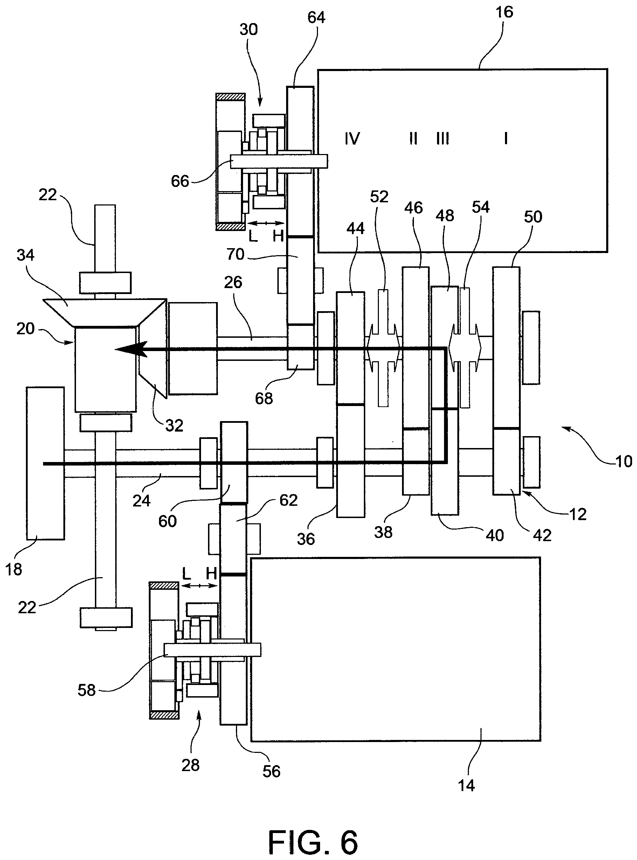

Figure 6 shows the condition of engagement of the third gear, obtained by shifting the coupling device 54 into the first engagement position defined above, in which that device connects the driven gearwheel 48 for rotation with the secondary shaft 26. The transmission of the motion from the primary shaft 24 to the secondary shaft 26 of the main gearbox 12 takes place therefore through the gear set of third gear formed by the driving gearwheel 40 and by the driven gearwheel 48.

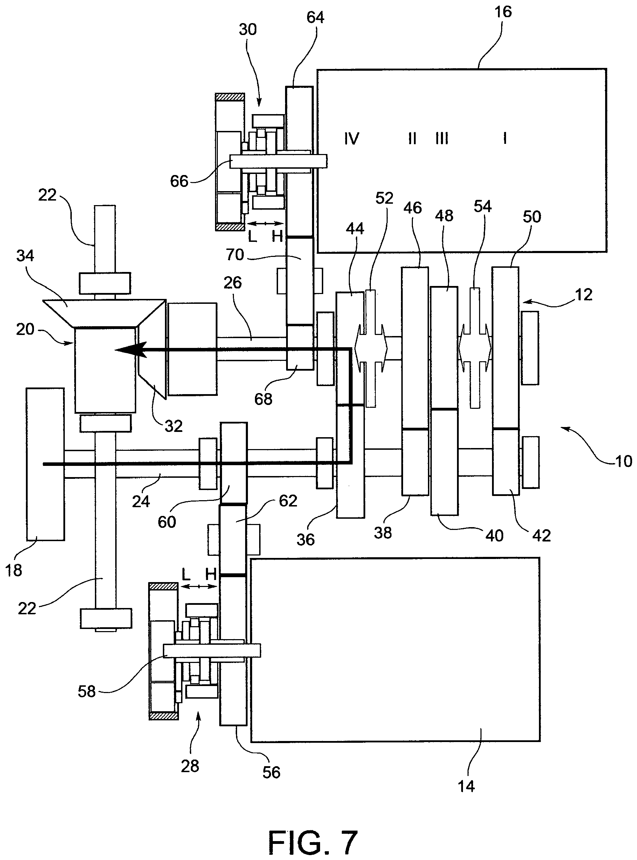

Figure 7 shows the condition of engagement of the fourth gear, obtained by shifting the coupling device 52 into the first engagement position defined above, in which that device connects the driven gearwheel 44 for rotation with the secondary shaft 26. The transmission of the motion from the primary shaft 24 to the secondary shaft 26 of the main gearbox 12 takes place therefore through the gear set of fourth gear formed by the driving gearwheel 36 and by the driven gearwheel 44.

In each of the four above-described operating conditions, the second electric machine 16 can be connected to the secondary shaft 26 of the main gearbox 12 by shifting the coupling device 74 of the second secondary gearbox 30 into the first or the second engagement position (low gear or high gear) and can therefore transmit torque to the vehicle wheels in parallel to the internal combustion engine. In this connection, it is to be noticed that having a secondary gearbox with two or more gears associated to the second electric machine allows this latter to operate in optimal number of revolutions per minute conditions (maximum efficiency) in a wider speed range of the motor vehicle than in the case where there is no secondary gearbox associated to the second electric machine.

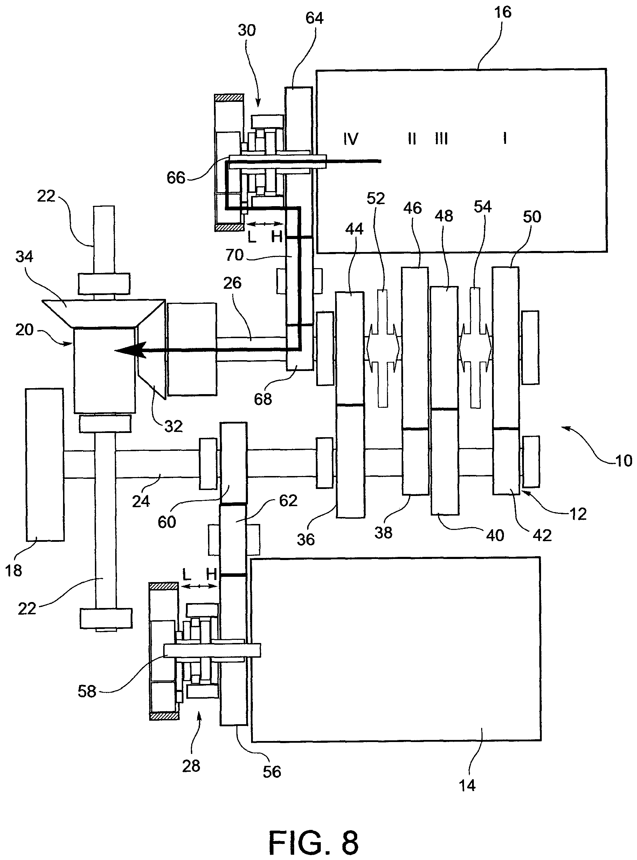

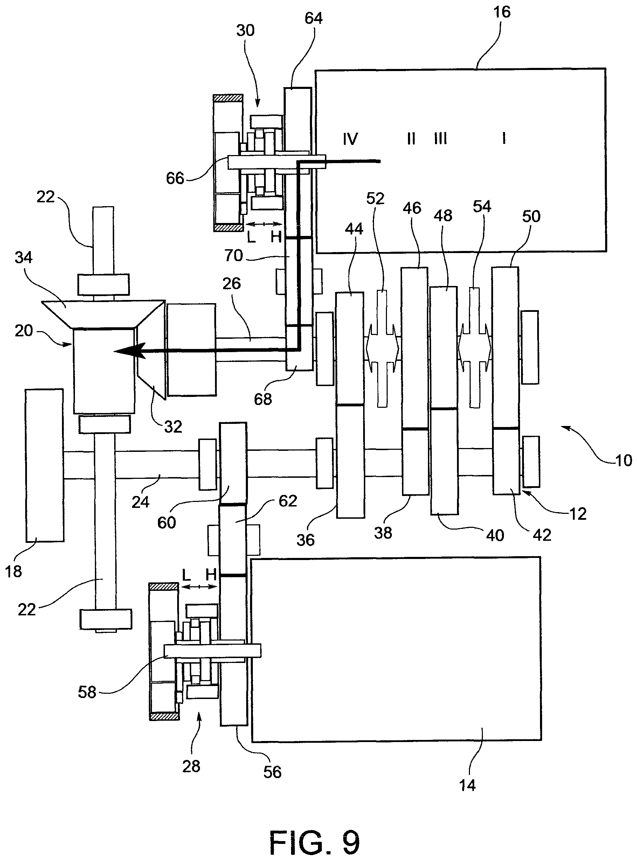

Figures 8 and 9 refer to the purely electric operating condition of the transmission, in which the second electric machine 16 is connected to the secondary shaft 26 of the main gearbox 12 by virtue of the fact that the coupling device 74 of the second secondary gearbox 30 is in the first or second engagement position defined above, while the coupling devices 52 and 54 of the main gearbox 12 are each in the neutral position. In the condition illustrated in Figure 8 the second electric machine 16 transmits torque with the low gear engaged, whereas Figure 9 refers to the condition of engagement of the high gear of the second secondary gearbox 30.

Figures 10 and 11 finally refer to the condition in which the first electric machine 14 is connected to the primary shaft 24 of the main gearbox 12 and hence, through the friction clutch 18, to the internal combustion engine of the vehicle, to operate either as a starting motor to start the internal combustion engine or as a generator to generate current to charge the batteries on board of the vehicle. In that condition, the coupling device 74 of the first secondary gearbox 28 is in the first or second engagement position defined above, as shown in Figure 10 and in Figure 11, respectively, whereas the coupling devices 52 and 54 of the main gearbox 12 are each in the neutral position.

As is clear from the above description, the connection of the first electric machine 14 with the primary shaft 24 of the main gearbox 12 and the connection of the second electric machine 16 with the secondary shaft 26 of the main gearbox 12 are controllable through the coupling devices 74 of the two secondary gearboxes 28 and 30 associated to those electric machines. Should the secondary gearbox(es) associated to the first electric machine 14 and/or the second electric machine 16 not be provided for, the gearwheels 60 and/or 68 of the first and second connection gear sets might be idly mounted on the respective primary shaft 24 and secondary shaft 26 and be connectable for rotation each with the respective shaft by means of a respective coupling device, in which case the connection between the first and/or second electric machines and the primary and secondary shafts of the main gearbox would be controllable through this or these coupling devices.

The hybrid transmission according to the invention is therefore able to operate in the following operating modes:
- non-hybrid traction mode, in which the electric machines are neither connected to the input (primary shaft) nor to the output (secondary shaft) of the main gearbox and therefore the vehicle wheels receive the torque from the internal combustion engine only;
- hybrid traction mode, in which the second electric machine is connected to the output of the transmission (secondary shaft) and operates as a motor to generate torque for the vehicle wheels in parallel to the internal combustion engine;
- purely electric traction mode, in which the second electric machine is connected to the output of the transmission (secondary shaft) and operates as a motor to generate torque for the vehicle wheels in place of the internal combustion engine; this mode can be used either when the vehicle is running in purely electric mode (in the forward or backward direction, this latter being obtained by inverting the direction of rotation of the electric machine) or during the gear shift phases of the main gearbox to compensate for or at least to reduce the interruption in the transmission of the torque (the so-called "torque hole") that occurs during shifting from one gear to another;
- starting mode, in which the first electric machine is connected to the input of the transmission (primary shaft) and operates as a starting motor to start the internal combustion engine of the vehicle;
- generation mode, in which the first electric machine is connected to the input of the transmission (primary shaft) and receive the motion from the internal combustion engine of the vehicle to operate as an electric power generator to charge the batteries on board of the vehicle; and
- kinetic energy recovery mode, in which the second electric machine is connected to the output of the transmission (secondary shaft) and receives the motion from the vehicle wheels to operate as an electric power generator to charge the batteries on board of the vehicle; in this operating mode the resisting torque from the second electric machine causes a braking effect on the vehicle wheels and can thus be used as a braking assisting means.

Naturally, the principle of the invention remaining unchanged, the embodiments and the constructional details may vary widely from those described and illustrated purely by way of non-limiting example, without thereby departing from the scope of the invention as defined in the attached claims.

## Claims

1. Hybrid transmission (10) for a motor vehicle, comprising a main gearbox (12), a first electric machine (14) and a second electric machine (16),
wherein the main gearbox (12) is a mechanical gearbox with a plurality of gears and comprises a primary shaft (24) adapted to be connected to a shaft of the internal combustion engine of the vehicle and a secondary shaft (26) adapted to be connected to the vehicle wheels,
wherein the transmission (10) further comprises first coupling means (74) interposed between said first electric machine (14) and said primary shaft (24) and a second coupling means (74) interposed between said second electric machine (16) and said secondary shaft (26), said first electric machine (14) being releasably connected, through said first coupling means (74), to said primary shaft (24), and said second electric machine (16) being releasably connected, through said second coupling means (74), to said secondary shaft (26), wherein the transmission further comprises
a first connection gear set (56, 60, 62) for connection of said first electric machine (14) with said primary shaft (24) and a second connection gear set (64, 68, 70) for connection of said second electric machine (16) with said secondary shaft (26), said first connection gear set (56, 60, 62) including a first gearwheel (60) mounted on said primary shaft (24) and said second connection gear set (64, 68, 70) including a second gearwheel (68) mounted on said secondary shaft (26), and
a first secondary gearbox (28) with two or more gears interposed between said first electric machine (14) and said first gearwheel (60),
wherein said first electric machine (14) comprises a first output shaft (58) on which a first output gearwheel (56) forming part of said first connection gear set (56, 60, 62) is idly mounted, and wherein said first secondary gearbox (28) comprises a first reduction mechanism (72), which is interposed between said first output shaft (58) and said first output gearwheel (56), and a first coupling device (74), which is shiftable at least into a first engagement position, in which it connects said first output shaft (58) for rotation with said first output gearwheel (56) through said first reduction mechanism (72) to provide a first gear, or low gear, of said first secondary gearbox (28), and into a second engagement position, in which it connects said first output gearwheel (56) for rotation directly with said first output shaft (58) to provide a second gear, or high gear, of said first secondary gearbox (28).

2. Transmission according to claim 1, wherein said first gearwheel (60) is drivingly connected for rotation with said primary shaft (24), wherein said first coupling device (74) is also shiftable into a neutral position, in which it disconnects said first output gearwheel (56) both from said first output shaft (58) and from said first reduction mechanism (72), and wherein said first coupling means (74) are formed by said first coupling device (74).

3. Transmission according to claim 1 or claim 2, further comprising a second secondary gearbox (30) with two or more gears interposed between said second electric machine (16) and said second gearwheel (68).

4. Transmission according to claim 3, wherein said second electric machine (16) comprises a second output shaft (66) on which a second output gearwheel (64) forming part of said second connection gear set (64, 68, 70) is idly mounted, and wherein said second secondary gearbox (30) comprises a second reduction mechanism (72), which is interposed between said second output shaft (66) and said second output gearwheel (64), and a second coupling device (74), which is shiftable at least into a first engagement position, in which it connects said second output shaft (66) for rotation with said second output gearwheel (64) through said second reduction mechanism (72) to provide a first gear, or low gear, of said second secondary gearbox (30), and into a second engagement position, in which it connects said second output gearwheel (64) for rotation directly with said second output shaft (66) to provide a second gear, or high gear, of said second secondary gearbox (30).

5. Transmission according to claim 4, wherein said second gearwheel (68) is drivingly connected for rotation with said secondary shaft (26), wherein said second coupling device (74) is also shiftable into a neutral position, in which it disconnects said second output gearwheel (64) both from said second output shaft (66) and from said second reduction mechanism (72), and wherein said second coupling means (74) is are formed by said second coupling device (74).

6. Hybrid transmission (10) for a motor vehicle, comprising a main gearbox (12), a first electric machine (14) and a second electric machine (16),
wherein the main gearbox (12) is a mechanical gearbox with a plurality of gears and comprises a primary shaft (24) adapted to be connected to a shaft of the internal combustion engine of the vehicle and a secondary shaft (26) adapted to be connected to the vehicle wheels,
wherein the transmission (10) further comprises first coupling means (74) interposed between said first electric machine (14) and said primary shaft (24) and a second coupling means (74) interposed between said second electric machine (16) and said secondary shaft (26), said first electric machine (14) being releasably connected, through said first coupling means (74), to said primary shaft (24), and said second electric machine (16) being releasably connected, through said second coupling means (74), to said secondary shaft (26), wherein the transmission further comprises
a first connection gear set (56, 60, 62) for connection of said first electric machine (14) with said primary shaft (24) and a second connection gear set (64, 68, 70) for connection of said second electric machine (16) with said secondary shaft (26), said first connection gear set (56, 60, 62) including a first gearwheel (60) mounted on said primary shaft (24) and said second connection gear set (64, 68, 70) including a second gearwheel (68) mounted on said secondary shaft (26), and
a second secondary gearbox (30) with two or more gears interposed between said second electric machine (16) and said second gearwheel (68),
wherein said second electric machine (16) comprises a second output shaft (66) on which a second output gearwheel (64) forming part of said second connection gear set (64, 68, 70) is idly mounted, and wherein said second secondary gearbox (30) comprises a second reduction mechanism (72), which is interposed between said second output shaft (66) and said second output gearwheel (64), and a second coupling device (74), which is shiftable at least into a first engagement position, in which it connects said second output shaft (66) for rotation with said second output gearwheel (64) through said second reduction mechanism (72) to provide a first gear, or low gear, of said second secondary gearbox (30), and into a second engagement position, in which it connects said second output gearwheel (64) for rotation directly with said second output shaft (66) to provide a second gear, or high gear, of said second secondary gearbox (30).

7. Transmission according to claim 6, wherein said second gearwheel (68) is drivingly connected for rotation with said secondary shaft (26), wherein said second coupling device (74) is also shiftable into a neutral position, in which it disconnects said second output gearwheel (64) both from said second output shaft (66) and from said second reduction mechanism (72), and wherein said second coupling means (74) are formed by said second coupling device (74).

## Patentansprüche

1. Hybridgetriebe (10) für ein Kraftfahrzeug, mit einem Hauptgetriebe (12), einer ersten elektrischen Maschine (14) und einer zweiten elektrischen Maschine (16),
bei dem das Hauptgetriebe (12) ein mechanisches Getriebe mit einer Vielzahl von Gängen ist und eine Hauptwelle (24), die derart angepasst ist, dass sie mit einer Welle des Verbrennungsmotors des Fahrzeugs verbunden wird, und eine Nebenwelle (26), die derart angepasst ist, dass sie mit den Fahrzeugreifen verbunden wird, aufweist,
bei dem das Getriebe (10) ferner erste Kopplungsmittel (74), die zwischen der ersten elektrischen Maschine (14) und der Hauptwelle (24) angeordnet sind, und ein zweites Kopplungsmittel (74), das zwischen der zweiten elektrischen Maschine (16) und der Nebenwelle (26) angeordnet ist, aufweist, wobei die erste elektrische Maschine (14) lösbar durch die ersten Kopplungsmittel (74) mit der Hauptwelle (24) verbunden ist und die zweite elektrische Maschine (16) durch das zweite Kopplungsmittel (74) lösbar mit der Nebenwelle (26) verbunden ist, wobei das Getriebe ferner aufweist
einen ersten Verbindungszahnradsatz (56, 60, 62) zur Verbindung der ersten elektrischen Maschine (14) mit der Hauptwelle (24) und einen zweiten Verbindungszahnradsatz (64, 68, 70) zur Verbindung der zweiten elektrischen Maschine (16) mit der Nebenwelle (26), wobei der erste Verbindungszahnradsatz (56, 60, 62) ein erstes Zahnrad (60) aufweist, das an der Hauptwelle (24) montiert ist, und der zweite Verbindungszahnradsatz (64, 68, 70) ein zweites Zahnrad (68) aufweist, das an der Nebenwelle (26) montiert ist, und
ein erstes Nebengetriebe (28) mit zwei oder mehr Gängen, das zwischen der ersten elektrischen Maschine (14) und dem ersten Zahnrad (60) angeordnet ist,
bei dem die erste elektrische Maschine (14) eine erste Ausgangswelle (58) aufweist, auf der ein erstes Ausgangszahnrad (56), das einen Teil des ersten Verbindungszahnradsatzes (56, 60, 62) bildet, leerlaufend montiert ist, und bei dem das erste Nebengetriebe (28) einen ersten Reduzierungsmechanismus (72), der zwischen der ersten Ausgangswelle (58) und dem ersten Ausgangszahnrad (56) angeordnet ist, und eine erste Kopplungseinrichtung (74) aufweist, die wenigstens in eine erste Eingriffsposition, bei der sie die erste Ausgangswelle (58) für eine Drehung mit dem ersten Ausgangszahnrad (56) durch den ersten Reduzierungsmechanismus (72) zum Vorsehen eines ersten Gangs oder niedrigen Gangs des ersten Nebengetriebes (28) verbindet, und in eine zweite Eingriffsposition, bei der sie das erste Ausgangszahnrad (56) für eine Drehung direkt mit der ersten Ausgangswelle (58) zum Vorsehen eines zweiten Gangs oder hohen Gangs des ersten Nebengetriebes (28) verbindet, schaltbar ist.

2. Getriebe nach Anspruch 1, bei dem das erste Zahnrad (60) antriebsmäßig für eine Drehung mit der Hauptwelle (24) verbunden ist, bei dem die erste Kopplungseinrichtung (74) auch in eine neutrale Position schaltbar ist, bei der sie das erste Ausgangszahnrad (56) sowohl von der ersten Ausgangswelle (58) als auch von dem ersten Reduzierungsmechanismus (72) trennt, und bei dem die ersten Kopplungsmittel (74) durch die erste Kopplungseinrichtung (74) gebildet werden.

3. Getriebe nach Anspruch 1 oder 2, ferner mit einem zweiten Nebengetriebe (30) mit zwei oder mehr Gängen, das zwischen der zweiten elektrischen Maschine (16) und dem zweiten Zahnrad (68) angeordnet ist.

4. Getriebe nach Anspruch 3, bei dem die zweite elektrische Maschine (16) eine zweite Ausgangswelle (66) aufweist, auf der ein zweites Ausgangszahnrad (64), das einen Teil des zweiten Verbindungszahnradsatzes (64, 68, 70) bildet, leerlaufend montiert ist, und bei dem das zweite Nebengetriebe (30) einen zweiten Reduzierungsmechanismus (72) aufweist, der zwischen der zweiten Ausgangswelle (66) und dem zweiten Ausgangszahnrad (64) angeordnet ist, und eine zweiten Kopplungseinrichtung (74) aufweist, die wenigstens in eine erste Eingriffsposition, bei der sie die zweite Ausgangswelle (66) für eine Drehung mit dem zweiten Ausgangszahnrad (64) durch den zweiten Reduzierungsmechanismus (72) zum Vorsehen eines ersten Gangs oder niedrigen Gangs des zweiten Nebengetriebes (30) verbindet, und in eine zweite Eingriffsposition, bei der sie das zweite Ausgangszahnrad (64) für eine Drehung direkt mit der zweiten Ausgangswelle (66) zum Vorsehen eines zweiten Gangs oder hohen Gangs des zweiten Nebengetriebes (30) verbindet, schaltbar ist.

5. Getriebe nach Anspruch 4, bei dem das zweite Zahnrad (68) antriebsmäßig für eine Drehung mit der Nebenwelle (26) verbunden ist, bei dem die zweite Kopplungseinrichtung (74) auch in eine neutrale Position schaltbar ist, bei der sie das zweite Ausgangszahnrad (64) sowohl von der zweiten Ausgangswelle (66) als auch von dem zweiten Reduzierungsmechanismus (72) trennt, und bei dem die zweiten Kopplungsmittel (74) durch die zweite Kopplungseinrichtung (74) gebildet werden.

6. Hybridgetriebe (10) für ein Kraftfahrzeug, mit einem Hauptgetriebe (12), einer ersten elektrischen Maschine (14) und einer zweiten elektrischen Maschine (16),
bei dem das Hauptgetriebe (12) ein mechanisches Getriebe mit einer Vielzahl von Gängen ist und eine Hauptwelle (24), die derart angepasst ist, dass sie mit einer Welle des Verbrennungsmotors des Fahrzeugs verbunden wird, und eine Nebenwelle (26), die derart angepasst ist, dass sie mit den Fahrzeugreifen verbunden wird, aufweist,
bei dem das Getriebe (10) ferner erste Kopplungsmittel (74), die zwischen der ersten elektrischen Maschine (14) und der Hauptwelle (24) angeordnet sind, und ein zweites Kopplungsmittel (74), das zwischen der zweiten elektrischen Maschine (16) und der Nebenwelle (26) angeordnet ist, aufweist, wobei die erste elektrische Maschine (14) lösbar durch die ersten Kopplungsmittel (74) mit der Hauptwelle (24) verbunden ist und die zweite elektrische Maschine (16) durch das zweite Kopplungsmittel (74) lösbar mit der Nebenwelle (26) verbunden ist, wobei das Getriebe ferner aufweist
einen ersten Verbindungszahnradsatz (56, 60, 62) zur Verbindung der ersten elektrischen Maschine (14) mit der Hauptwelle (24) und einen zweiten Verbindungszahnradsatz (64, 68, 70) zur Verbindung der zweiten elektrischen Maschine (16) mit der Nebenwelle (26), wobei der erste Verbindungszahnradsatz (56, 60, 62) ein erstes Zahnrad (60) aufweist, das an der Hauptwelle (24) montiert ist, und der zweite Verbindungszahnradsatz (64, 68, 70) ein zweites Zahnrad (68) aufweist, das an der Nebenwelle (26) montiert ist, und
ein zweites Nebengetriebe (30) mit zwei oder mehr Gängen, das zwischen der zweiten elektrischen Maschine (16) und dem zweiten Zahnrad (68) angeordnet ist,
bei dem die zweite elektrische Maschine (16) eine zweite Ausgangswelle (66) aufweist, an der ein zweites Ausgangszahnrad (64), das einen Teil des zweiten Verbindungszahnradsatzes (64, 68, 70) bildet, leerlaufend montiert ist, und bei dem das zweite Nebengetriebe (30) einen zweiten Reduzierungsmechanismus (72), der zwischen der zweiten Ausgangswelle (66) und dem zweiten Ausgangszahnrad (64) angeordnet ist, und eine zweite Kopplungseinrichtung (74) aufweist, die wenigstens in eine erste Eingriffsposition, bei der sie die zweite Ausgangswelle (66) für eine Drehung mit dem zweiten Ausgangszahnrad (64) durch den zweiten Reduzierungsmechanismus (72) zum Vorsehen eines ersten Gangs oder niedrigen Gangs des zweiten Nebengetriebes (30) verbindet, und in eine zweite Eingriffsposition, bei der sie das zweite Ausgangszahnrad (64) für eine Drehung direkt mit der zweiten Ausgangswelle (66) zum Vorsehen eines zweiten Gangs oder hohen Gangs des zweiten Nebengetriebes (30) verbindet, schaltbar ist.

7. Getriebe nach Anspruch 6, bei dem das zweite Zahnrad (68) antriebsmäßig für eine Drehung mit der Nebenwelle (26) verbunden ist, bei dem die zweite Kopplungseinrichtung (74) auch in eine neutrale Position schaltbar ist, bei der sie das zweite Ausgangszahnrad (64) sowohl von der zweiten Ausgangswelle (66) als auch von dem zweiten Reduzierungsmechanismus (72) trennt, und bei dem die zweiten Kopplungsmittel (74) durch die zweite Kopplungseinrichtung (74) gebildet werden.

## Revendications

1. Transmission hybride (10) pour véhicule à moteur, comprenant une boîte de vitesses principale (12), une première machine électrique (14) et une seconde machine électrique (16),
dans laquelle la boîte de vitesses principale (12) est une boîte de vitesses mécanique ayant une pluralité d'engrenages et comprend un arbre primaire (24) adapté pour être relié à un arbre du moteur à combustion interne du véhicule et un arbre secondaire (26) adapté pour être relié aux roues de véhicule,
dans laquelle la transmission (10) comprend en outre des premiers moyens de couplage (74) interposés entre ladite première machine électrique (14) et ledit arbre primaire (24) et des seconds moyens de couplage (74) interposés entre ladite seconde machine électrique (16) et ledit arbre secondaire (26), ladite première machine électrique (14) étant reliée de manière libérable, à travers lesdits premiers moyens de couplage (74), audit arbre primaire (24), et ladite seconde machine électrique (16) étant reliée de manière libérable, à travers lesdits seconds moyens de couplage (74), audit arbre secondaire (26),
dans laquelle la transmission comprend en outre
un premier ensemble d'engrenages de connexion (56, 60, 62) pour connecter ladite première machine électrique (14) audit arbre primaire (24) et un second ensemble d'engrenages de connexion (64, 68, 70) pour connecter ladite seconde machine électrique (16) audit arbre secondaire (26), ledit premier ensemble d'engrenages de connexion (56, 60, 62) comprenant une première roue dentée (60) montée sur ledit arbre primaire (24) et ledit second ensemble d'engrenages de connexion (64, 68, 70) comprenant une seconde roue dentée (68) montée sur ledit arbre secondaire (26), et
une première boîte de vitesses secondaire (28) ayant deux ou plus de deux engrenages interposés entre ladite première machine électrique (14) et ladite première roue dentée (60),
dans laquelle ladite première machine électrique (14) comprend un premier arbre de sortie (58) sur lequel une première roue dentée de sortie (56) faisant partie dudit premier ensemble d'engrenages de connexion (56, 60, 62) est montée de manière découplée, et dans laquelle ladite première boîte de vitesses secondaire (28) comprend un premier mécanisme de réduction (72), qui est interposé entre ledit premier arbre de sortie (58) et ladite première roue dentée de sortie (56), et un premier dispositif de couplage (74), qui peut être décalé au moins dans une première position de prise, dans laquelle il est relié audit premier arbre de sortie (58) pour une rotation avec ladite première roue dentée de sortie (56) par l'intermédiaire dudit premier mécanisme de réduction (72) pour fournir un premier rapport, ou rapport faible, de ladite première boîte de vitesses secondaire (28), et dans une seconde position de prise, dans laquelle il est relié à ladite première roue dentée de sortie (56) pour une rotation directement avec ledit arbre de sortie (58) pour fournir un second rapport, ou rapport élevé, de ladite première boîte de vitesses secondaire (28).

2. Transmission selon la revendication 1, dans laquelle ladite première roue dentée (60) est reliée de manière entraînante pour tourner avec ledit arbre primaire (24), dans laquelle ledit premier dispositif de couplage (74) peut également être décalé dans une position neutre, dans laquelle il déconnecte ladite première roue dentée de sortie (56) à la fois dudit premier arbre de sortie (58) et dudit premier mécanisme de réduction (72), et dans laquelle lesdits premiers moyens de couplage (74) sont formés par ledit premier dispositif de couplage (74).

3. Transmission selon la revendication 1 ou la revendication 2, comprenant en outre une seconde boîte de vitesses secondaire (30) ayant deux ou plus de deux engrenages interposés entre ladite seconde machine électrique (16) et ladite seconde roue dentée (68).

4. Transmission selon la revendication 3, dans laquelle ladite seconde machine électrique (16) comprend un second arbre de sortie (66) sur lequel une seconde roue dentée de sortie (64) faisant partie dudit second ensemble d'engrenages de connexion (64, 68, 70) est montée de manière découplée, et dans laquelle ladite seconde boîte de vitesses secondaire (30) comprend un second mécanisme de réduction (72), qui est interposé entre ledit second arbre de sortie (66) et ladite seconde roue dentée de sortie (64), et un second dispositif de couplage (74), qui peut être décalé au moins dans une première position de prise, dans laquelle il est relié audit second arbre de sortie (66) pour une rotation avec ladite seconde roue dentée de sortie (64) par l'intermédiaire dudit second mécanisme de réduction (72) pour fournir un premier rapport, ou rapport faible, de ladite seconde boîte de vitesses secondaire (30), et dans une seconde position de prise, dans laquelle il est relié à ladite seconde roue dentée de sortie (64) pour une rotation directement avec ledit second arbre de sortie (66) pour fournir un second rapport, ou rapport élevé, de ladite seconde boîte de vitesses secondaire (30).

5. Transmission selon la revendication 4, dans laquelle ladite seconde roue dentée (68) est reliée de manière entraînante pour tourner avec ledit arbre secondaire (26), dans laquelle ledit second dispositif de couplage (74) peut également être décalé dans une position neutre, dans laquelle il déconnecte ladite seconde roue dentée de sortie (64) à la fois dudit second arbre de sortie (66) et dudit second mécanisme de réduction (72), et dans laquelle lesdits seconds moyens de couplage (74) sont formés par ledit second dispositif de couplage (74).

6. Transmission hybride (10) pour véhicule à moteur, comprenant une boîte de vitesses principale (12), une première machine électrique (14) et une seconde machine électrique (16),
dans laquelle la boîte de vitesses principale (12) est une boîte de vitesses mécanique ayant une pluralité d'engrenages et comprend un arbre primaire (24) adapté pour être relié à un arbre du moteur à combustion interne du véhicule et un arbre secondaire (26) adapté pour être relié aux roues de véhicule,
dans laquelle la transmission (10) comprend en outre des premiers moyens de couplage (74) interposés entre ladite première machine électrique (14) et ledit arbre primaire (24) et des seconds moyens de couplage (74) interposés entre ladite seconde machine électrique (16) et ledit arbre secondaire (26), ladite première machine électrique (14) étant reliée de manière libérable, à travers lesdits premiers moyens de couplage (74), audit arbre primaire (24), et ladite seconde machine électrique (16) étant reliée de manière libérable, à travers lesdits seconds moyens de couplage (74), audit arbre secondaire (26),
dans laquelle la transmission comprend en outre
un premier ensemble d'engrenages de connexion (56, 60, 62) pour connecter ladite première machine électrique (14) audit arbre primaire (24) et un second ensemble d'engrenages de connexion (64, 68, 70) pour connecter ladite seconde machine électrique (16) audit arbre secondaire (26), ledit premier ensemble d'engrenages de connexion (56, 60, 62) comprenant une première roue dentée (60) montée sur ledit arbre primaire (24) et ledit second ensemble d'engrenages de connexion (64, 68, 70) comprenant une seconde roue dentée (68) montée sur ledit arbre secondaire (26), et
une seconde boîte de vitesses secondaire (30) ayant deux ou plus de deux engrenages interposés entre ladite seconde machine électrique (16) et ladite seconde roue dentée (68),
dans laquelle ladite seconde machine électrique (16) comprend un second arbre de sortie (66) sur lequel une seconde roue dentée de sortie (64) faisant partie dudit second ensemble d'engrenages de connexion (64, 68, 70) est montée de manière découplée, et dans laquelle ladite seconde boîte de vitesses secondaire (30) comprend un second mécanisme de réduction (72), qui est interposé entre ledit second arbre de sortie (66) et ladite seconde roue dentée de sortie (64), et un second dispositif de couplage (74), qui peut être décalé au moins dans une première position de prise, dans laquelle il est relié audit second arbre de sortie (66) pour une rotation avec ladite seconde roue dentée de sortie (64) par l'intermédiaire dudit second mécanisme de réduction (72) pour fournir un premier rapport, ou rapport faible, de ladite seconde boîte de vitesses secondaire (30), et dans une seconde position de prise, dans laquelle il est relié à ladite seconde roue dentée de sortie (64) pour une rotation directement avec ledit second arbre de sortie (66) pour fournir un second rapport, ou rapport élevé, de ladite seconde boîte de vitesses secondaire (30).

7. Transmission selon la revendication 6, dans laquelle ladite seconde roue dentée (68) est reliée de manière entraînante pour tourner avec ledit arbre secondaire (26), dans laquelle ledit second dispositif de couplage (74) peut également être décalé dans une position neutre, dans laquelle il déconnecte ladite seconde roue dentée de sortie (64) à la fois dudit second arbre de sortie (66) et dudit second mécanisme de réduction (72), et dans laquelle lesdits seconds moyens de couplage (74) sont formés par ledit second dispositif de couplage (74).
